# FASCICULE DE BREVET EUROPEEN

(11) **EP 3 471 978 B1**
(45) Date de publication et mention de la délivrance du brevet: **26.05.2021**
(21) Numéro de dépôt: 17737335.4
(22) Date de dépôt: 16.06.2017
(51) Int. Cl.: B60H 1/00, B60H 1/32

(54) **BOUCLE DE CIRCULATION D'UN FLUIDE REFRIGERANT POUR VEHICULE**
KÜHLMITTELKREISLAUF FÜR FAHRZEUG
COOLANT CIRCULATION LOOP FOR VEHICLE

(30) Priorité: 21.06.2016 FR 1655770
(43) Date de publication de la demande: 24.04.2019
(73) Titulaire: Valeo Systemes Thermiques, 78320 Le Mesnil Saint Denis (FR)
(72) Inventeur: AZZOUZ, Kamel, 78322 LE MESNIL SAINT DENIS CEDEX (FR); JOVET, Bastien, 78322 LE MESNIL SAINT DENIS CEDEX (FR)
(74) Mandataire: Tran, Chi-Hai
(86) Numéro de dépôt international: PCT/FR2017/051587
(87) Numéro de publication internationale: WO 2017/220902

(56) Documents cités:
- EP-A1- 2 258 571
- WO-A1-2011/117207
- WO-A1-2012/146368
- WO-A1-2014/183972
- FR-A1- 2 974 327
- KR-A- 20130 101 254

## Description

La présente demande concerne une boucle de circulation d'un fluide réfrigérant, appliquée à une installation de chauffage, de ventilation et/ou de climatisation pour véhicule automobile, et plus particulièrement pour des voitures électriques ou des voitures hybrides.

Une boucle de circulation d'un fluide réfrigérant d'un type connu est décrite dans le document WO 2012/146368 A1.

Une voiture électrique ou hybride comporte une boucle de chauffage de ventilation, de climatisation et/ou de climatisation réversible, aussi nommée pompe à chaleur, afin de faire varier la température à l'intérieur de son habitacle, et notamment le réchauffer en période hivernale et, ainsi, apporter un certain confort à son utilisateur.

Plus précisément, la température de l'habitacle peut être tempérée par la circulation d'un fluide réfrigérant entre un dispositif d'échange de chaleur disposé dans le véhicule, généralement au voisinage de l'habitacle, et un échangeur thermique situé au contact de l'air ambiant, en face avant du véhicule. Une boucle de circulation peut être ainsi ménagée dans le véhicule pour apporter vers l'un et vers l'autre des moyens d'échange thermique le fluide réfrigérant dans un état approprié.

Le fluide réfrigérant absorbe ou cède de la chaleur au niveau des échangeurs thermiques en fonction de phases de fonctionnement de la pompe à chaleur. Un compresseur peut être utilisé pour comprimer le fluide réfrigérant dans la boucle de chauffage et ainsi changer la température du réfrigérant amené à passer par la suite à travers différents moyens d'échange thermique.

Le compresseur, comme tout organe électrique, est alimenté par les batteries du véhicule. L'autonomie des batteries dépend donc directement du régime de fonctionnement du compresseur. Or, plus la température baisse à l'extérieur de l'habitacle, plus le régime du compresseur doit augmenter afin d'assurer le même confort à l'utilisateur du véhicule. De ce fait, en conditions hivernales, la boucle de chauffage consomme beaucoup plus d'énergie, diminuant d'autant l'autonomie électrique du véhicule.

Par ailleurs, l'échangeur thermique situé en face avant du véhicule, généralement sous le capot moteur, dit échangeur thermique frontal, fonctionne notamment au moyen de l'air extérieur le traversant. Or, à cause de son exposition directe à l'air extérieur, sans que celui-ci ne puisse se réchauffer par la structure du véhicule avant son passage dans l'échangeur thermique frontal, est susceptible de givrer lorsque la température extérieure est très faible, par exemple inférieure à 2 ou 3°C. Le fluide réfrigérant, plus froid que l'air ambiant, provoque une condensation sur les parois de l'échangeur thermique et le givre est possible dans des conditions de basse température et hygrométrie élevée.

La présente invention vise ainsi à remédier à cet inconvénient, en proposant une boucle de circulation d'un fluide réfrigérant de type boucle de chauffage, de ventilation et/ou de climatisation, plus économe en consommation électrique, notamment en conditions hivernales d'utilisation et qui permette d'éviter le fonctionnement en pleine charge de l'échangeur thermique frontal sans pour autant pénaliser l'efficacité de l'installation de chauffage, de ventilation et/ou de climatisation, c'est-à-dire en augmentant la puissance de chauffage à très basse température, notamment les températures inférieures à -10°C.

Dans ce contexte, la présente invention propose une boucle de circulation d'un fluide réfrigérant pour véhicule automobile comportant un dispositif d'échange de chaleur comprenant au moins un évaporateur et un élément de distribution piloté pour configurer la boucle selon au moins un premier mode dans lequel le fluide réfrigérant ne passe pas par l'évaporateur et un deuxième mode dans lequel le fluide réfrigérant passe par l'évaporateur.

L'élément de distribution permet ainsi de passer d'un premier mode de pompe à chaleur, dans lequel on réchauffe l'habitacle du véhicule, à un deuxième mode de climatisation, dans lequel on refroidit l'habitacle.

Selon l'invention, la boucle de circulation comprend en outre au moins un module de stockage d'énergie thermique comportant un matériau apte à changer de phase, le module de stockage étant disposé sur la boucle quelle que soit la configuration donnée par l'élément de distribution, c'est-à-dire que la boucle soit configurée indifféremment selon le premier mode ou le deuxième mode.

Il est notable que le module de stockage est disposé sur la boucle de la pompe à chaleur, c'est-à-dire qu'il est opérationnel quel que soit le mode configuré, pompe à chaleur ou climatisation, dès lors qu'il peut fournir l'énergie nécessaire au fluide réfrigérant.

Le module de stockage permet d'échanger de l'énergie thermique avec le fluide réfrigérant, ce qui permet avantageusement d'élever la température du fluide circulant dans la boucle de circulation dès lors que le matériau à changement de phase disposé dans le module de stockage est dans un état propre à transmettre de l'énergie au fluide réfrigérant. De cette façon, dans la boucle de circulation, notamment lors de son passage dans le dispositif d'échange de chaleur, le fluide réfrigérant a une température élevée sans que le travail du compresseur pour pressuriser ledit fluide à une valeur souhaitée soit trop consommateur d'énergie. Ceci permet de diminuer significativement la consommation électrique de l'installation de chauffage, de ventilation et/ou de climatisation. On comprend que cette invention est notamment avantageuse lorsque le véhicule fonctionne à l'aide d'une batterie électrique, l'autonomie du véhicule et la longévité de la batterie s'en trouvant augmentées.

Selon l'invention, la boucle comporte un échangeur thermique frontal et le module de stockage d'énergie thermique est agencé en parallèle de l'échangeur thermique frontal dans la boucle de circulation. La montée en température du fluide est différente de celle qu'il aurait eu en passant par l'échangeur thermique, de sorte que l'on crée une phase de pré-conditionnement du véhicule lors de laquelle on puise dans l'énergie stockée préalablement dans le moyen de stockage pour réchauffer le fluide réfrigérant et le maintenir dans des conditions adéquates au réchauffement de l'air amené à passer par le dispositif d'échange de chaleur pour être soufflé dans l'habitacle.

Par échangeur thermique frontal, on entend un échangeur thermique destiné à être présent à l'extérieur de l'habitacle du véhicule, préférentiellement en face avant du véhicule, directement au contact de l'air extérieur au véhicule.

En outre, au démarrage du véhicule, notamment dans des conditions de grand froid, lorsque le module de stockage est rechargé, le fluide réfrigérant est amené à passer par le module de stockage plutôt que par l'échangeur thermique frontal et on évite ainsi une condensation sur les parois de l'échangeur thermique frontal qui peut créer un givrage de ce dernier.

Le module de stockage thermique peut notamment comprendre un carter réalisé dans un matériau conducteur thermique, de préférence métallique, comprenant une chambre interne creuse, contenant le matériau à changement de phase, ainsi qu'une entrée et une sortie via lesquelles respectivement, le fluide réfrigérant s'introduit dans le carter et s'échappe du carter, de telle sorte qu'au moins une partie du fluide réfrigérant s'écoulant dans le carter interagisse thermiquement avec le matériau à changement de phase. De cette manière, un échange thermique entre le fluide réfrigérant et le matériau à changement de phase se produit au sein de la chambre creuse formée par le carter.

Le matériau à changement de phase placé dans la chambre creuse peut par exemple être sous forme de multiples tubes, microbilles ou granulés, le long desquels le liquide réfrigérant peut s'écouler en traversant le carter depuis l'entrée jusqu'à la sortie. Lors de cet écoulement, au moins une partie du liquide réfrigérant est alors amené à échanger de la chaleur avec le matériau à changement de phase. Bien entendu, d'autres configurations permettant une interaction thermique entre le matériau à changement de phase et le fluide réfrigérant s'écoulant au travers du carter peuvent être envisagées.

Typiquement, selon une réalisation possible, une conduite relie l'entrée à la sortie du carter, la chambre interne creuse du carter partageant alors préférentiellement au moins une paroi commune avec la conduite de sorte que la chaleur du fluide, respectivement du matériau à changement de phase, est transférée via cette paroi au matériau à changement de phase, respectivement au fluide. On pourra notamment prévoir que le matériau conducteur thermique composant le carter de réception du matériau à changement de phase soit de l'aluminium.

On peut notamment prévoir que le carter de réception du matériau à changement de phase présente une forme cylindrique de section annulaire, rectangulaire ou autre forme de section adaptée pour conduire le fluide réfrigérant et contenir du matériau à changement de phase, le matériau à changement de phase étant par exemple disposé tout autour de la conduite de circulation du fluide réfrigérant au centre du carter. On pourra en outre prévoir un dispositif d'isolation thermique autour du moyen de stockage d'énergie thermique.

Selon une série de caractéristiques, prises seules ou en combinaison, propres au matériau à changement de phase utilisé avantageusement dans la présente boucle de circulation, on pourra prévoir que :
- le matériau à changement de phase peut comporter un matériau comprenant des composés inorganiques tels qu'un alliage de sels organiques et d'eau ;
- le matériau à changement de phase peut comporter un matériau comprenant des composés organiques tels que les paraffines et les acides gras ;
- le matériau à changement de phase peut comporter un matériau comprenant des composés eutectiques ;
- le matériau à changement de phase peut comporter un matériau comprenant des composés d'origine végétale ;
- le matériau à changement de phase est intégré dans le module de stockage sous forme liquide ;
- le matériau à changement de phase est intégré dans le module de stockage sous forme d'un matériau composite polymérisé, notamment sous forme de feuille ;
- la température de changement de phase dudit matériau à changement de phase est comprise entre 10°C et 40°C ;
- la température critique de changement de phase du matériau à changement de phase est de 15°C.

De préférence, le module de stockage peut stocker au moins 200Wh, de préférence au moins 400Wh, afin que le module de stockage puisse chauffer suffisamment longtemps le fluide calorifique pour préserver de façon optimale la consommation électrique de la batterie d'une voiture électrique, au moins au début d'un trajet du véhicule (typiquement pendant environ 20 minutes), et ce quelle que soit la température extérieure.

Tel que cela a été précisé précédemment, le module de stockage d'énergie thermique est relié en parallèle à l'échangeur thermique frontal. On pourra notamment prévoir de réaliser cette mise en parallèle du module de stockage thermique par l'intermédiaire d'au moins une vanne, pilotée pour contrôler le débit de fluide réfrigérant passant par le module de stockage.

On associe à la boucle de circulation une unité de commande permettant de modifier la position d'au moins une vanne, notamment lors du démarrage du compresseur, de sorte qu'au moins une partie, de préférence la totalité du fluide réfrigérant, échange de l'énergie thermique avec le module de stockage. L'unité de commande peut ainsi isoler l'échangeur thermique frontal de la boucle de circulation, de sorte que le fluide réfrigérant circule à travers le module de stockage plutôt qu'à travers l'échangeur thermique frontal. Cela est notamment avantageux lorsque la température de l'air ambiant est inférieure à la température du module de stockage. C'est par exemple le cas lors d'une utilisation hivernale de la boucle de circulation.

Selon une caractéristique de l'invention, on prévoit une première sonde thermique, destinée à mesurer la température de l'air à l'extérieur de l'habitacle du véhicule. Cette première sonde peut notamment être reliée au module de commande décrit ci-dessus pour que celui-ci évalue la pertinence ou non de faire passer le fluide calorifique dans le module de stockage thermique en parallèle de l'échangeur thermique, c'est-à-dire en d'autres termes, de limiter le phénomène de pertes de chaleur du fluide calorifique au niveau de cet échangeur thermique frontal.

On pourra également prévoir des moyens de mesure d'une durée de temps déterminée, notamment afin de contrôler la position d'au moins une vanne en fonction de cette durée de temps déterminée. Ceci permet notamment de commander le passage du fluide réfrigérant à travers le module de stockage thermique pendant une durée définie, afin de ne pas vider complètement l'énergie thermique du module de stockage et n'en faire qu'un usage ponctuel.

En outre, une unité de commande telle qu'elle a été présentée ci-dessus pourra comporter des moyens de mémorisation d'un programme de pilotage de la boucle de circulation, et d'au moins une valeur seuil de température, et/ou au moins une valeur de référence de temps. Un exemple de programme de pilotage est décrit ci-dessous. Une valeur seuil de température correspond à une température à laquelle il est plus avantageux de faire passer le fluide réfrigérant par le module de stockage que par l'échangeur thermique frontal. Par les termes « plus avantageux », on entend ici le fait de pouvoir réduire la consommation électrique du compresseur et/ou de limiter le risque de dépôt de givre sur l'échangeur thermique frontal. Selon une réalisation avantageuse, la valeur seuil de température est déterminée en fonction d'au moins une valeur mesurée de la température extérieure au véhicule et/ou la température du matériau à changement de phase et/ou la température du fluide réfrigérant. Typiquement, la valeur seuil de température peut être configurée comme étant égale à la température extérieure au véhicule (mesurée par la première sonde), ou comme étant égale à une température de +/-1°C à +/-10°C par rapport à la température extérieure. Ainsi, lorsque la valeur seuil de température n'est pas atteinte au niveau de la troisième sonde (c'est-à-dire au niveau du matériau à changement de phase), le fluide réfrigérant provenant du dispositif d'échange thermique peut être dirigé vers le module de stockage, tandis que lorsque la valeur mesurée est égale ou supérieure à la valeur seuil, le débit du fluide réfrigérant provenant du dispositif d'échange thermique est dirigé vers l'échangeur thermique frontal. A titre d'exemple purement illustratif, une valeur seuil de température peut être comprise entre - 20°C et 5°C, de préférence de l'ordre de -10°C. Bien entendu, ces valeurs peuvent aussi être adaptées, par exemple en fonction de la configuration de la boucle de circulation et des éléments la constituant. De même, une valeur de référence de temps peut dépendre des mêmes critères que ceux mentionnés ci-dessus.

Selon une réalisation de l'invention, le dispositif d'échange de chaleur comprend un évaporateur et un condenseur interne distincts, alimentés respectivement en air ou non en fonction de la position d'un volet de mixage, et des buses de distribution de l'air passé par l'évaporateur, ou par le condenseur, dans l'habitacle du véhicule. Le dispositif d'échange de chaleur prend alors la forme d'un boîtier HVAC (acronyme pour « Heating, Ventilation and Air-Conditioning »).

Dans une alternative de réalisation, on pourra prévoir d'aménager la boucle de circulation pour l'adapter à un boîtier HVAC dans lequel le condenseur est remplacé par un radiateur, notamment en intégrant un deuxième fluide dans un circuit additionnel agencé entre le dispositif d'échange de chaleur et un échangeur réfrigérant air-eau monté sur la boucle de circulation en aval du compresseur. On forme ainsi un deuxième étage avec un condenseur à eau et une pompe rapportée sur le circuit additionnel, notamment pour s'adapter à des structures existantes de véhicule comportant des radiateurs. On peut ainsi utiliser pour des véhicules électriques ou hybrides des dispositifs d'échange de chaleur utilisés par ailleurs par des véhicules à moteur thermique.

On pourra prévoir dans chacun de ces cas la présence d'une deuxième sonde thermique destinée à mesurer la température de l'air à l'intérieur de l'habitacle du véhicule et/ou du fluide réfrigérant en sortie de l'élément de distribution d'air, afin notamment de déterminer si le fluide réfrigérant doit passer par l'élément de stockage thermique, plus particulièrement dans des cas de recharge du véhicule électrique et de possibilité de restocker de l'énergie thermique utilisée préalablement dans le module de stockage thermique. En variante ou en complément, l'unité de commande peut en outre être connectée à une troisième sonde thermique destinée à mesurer la température du matériau à changement de phase dans le module de stockage. On comprend que si un fluide réfrigérant, porté à une température supérieure à la température de changement de phase du matériau logé dans le module de stockage, circule dans le module de stockage, le matériau est susceptible de changer de phase et d'emmagasiner ainsi de l'énergie.

L'invention concerne également un véhicule comprenant une boucle de circulation décrite ci-dessus.

L'invention concerne également un procédé de pilotage de la circulation d'un fluide réfrigérant dans une boucle thermique décrite ci-dessus, comprenant au moins une étape de mesure de température de l'air ambiant et/ou du fluide réfrigérant circulant dans la boucle et/ou du matériau à changement de phase, ainsi qu'une étape de comparaison de cette valeur mesurée avec une valeur seuil de température, et une étape de commande visant à diriger le fluide réfrigérant en tout ou partie à travers le module de stockage thermique en fonction du résultat de l'étape de comparaison.

Notamment, on pourra prévoir que lorsque la valeur mesurée de température de l'air ambiant est inférieure à la valeur seuil, au moins une partie, de préférence la totalité, du débit du fluide réfrigérant provenant du dispositif d'échange thermique passe par le module de stockage, tandis que lorsque la valeur mesurée est égale ou supérieure à la valeur seuil, au moins une partie, de préférence la totalité, du débit du fluide réfrigérant provenant du dispositif d'échange thermique passe par l'échangeur thermique frontal.

Le procédé de pilotage selon l'invention permet ainsi d'utiliser ou de préserver la chaleur du module de stockage, en fonction de la température de l'air se trouvant à l'extérieur de l'habitacle du véhicule. Lorsque l'air ambiant est à titre d'exemple inférieur à -10°C, on estime d'une part que le passage d'air froid dans l'évapo-condenseur présente le risque de givrer la condensation formée sur les parois de cet évapo-condenseur et d'autre part que l'effort à fournir par le compresseur pour amener le fluide réfrigérant à la pression adéquate pour passer à travers le dispositif d'échange de chaleur est trop important, et l'on fait alors passer le fluide réfrigérant par le module de stockage thermique, le matériau à changement de phase participant à l'augmentation de l'énergie du fluide dans une mesure plus appropriée au fonctionnement économique de la boucle.

Le procédé de pilotage peut prévoir d'introduire une notion temporelle pour le passage d'au moins une partie, de préférence la totalité, du débit du fluide réfrigérant provenant du dispositif d'échange thermique. Ainsi, le fluide réfrigérant peut échanger de la chaleur avec le module de stockage pendant une durée déterminée au démarrage du compresseur, avant de passer par l'échangeur thermique frontal. Cette solution est particulièrement adaptée pour une utilisation quotidienne de la boucle de climatisation dans des conditions hivernales où la température est souvent en dessous de 0°C.

On pourra également prévoir que le procédé de pilotage tient compte de la température du fluide réfrigérant, de sorte lorsque la valeur mesurée est supérieure à la valeur seuil, au moins une partie, de préférence la totalité, du débit du fluide réfrigérant provenant du dispositif d'échange thermique passe par le module de stockage et de sorte que lorsque la valeur mesurée est égale ou inférieure à la valeur seuil, au moins une partie, de préférence la totalité, du débit du fluide réfrigérant provenant du dispositif d'échange thermique passe par l'échangeur thermique frontal. Selon cette alternative, on peut ainsi utiliser une partie de la chaleur du fluide réfrigérant pour chauffer le module de stockage d'énergie thermique et pour recharger le module de stockage, que ce soit lors du roulage du véhicule lorsque le chauffage de l'habitacle est arrêté, ou bien lors de sa recharge sur des bornes électriques.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres.

Les caractéristiques de l'invention mentionnées ci-dessus ainsi que d'autres, apparaîtrons plus clairement à la lecture ci-dessous de la description détaillée d'exemples non limitatifs, en se référant aux dessins annexés suivants :
- la figure 1 est une vue schématique d'une boucle de circulation d'un fluide réfrigérant selon un premier mode de réalisation, dans un mode pompe à chaleur, le fluide réfrigérant étant orienté pour traverser l'échangeur thermique frontal ;
- la figure 2 est une vue schématique d'une boucle de circulation d'un fluide réfrigérant selon une autre réalisation, dans un mode climatisation, le fluide réfrigérant étant ici orienté pour traverser l'échangeur thermique frontal ;
- la figure 3 est une vue schématique d'une boucle de circulation d'un fluide réfrigérant, dans un mode pompe à chaleur, similaire à la figure 1, le fluide réfrigérant étant ici orienté pour traverser le module de stockage thermique ;
- la figure 4 est une vue schématique d'une boucle de circulation d'un fluide réfrigérant, dans un mode climatisation, similaire à la figure 2, le fluide réfrigérant étant ici orienté pour traverser le module de stockage thermique ; et
- la figure 5 est une vue schématique d'une boucle circulation d'un fluide réfrigérant selon un deuxième mode de réalisation, dans un mode pompe à chaleur, le fluide réfrigérant étant ici orienté pour traverser le module de stockage thermique.

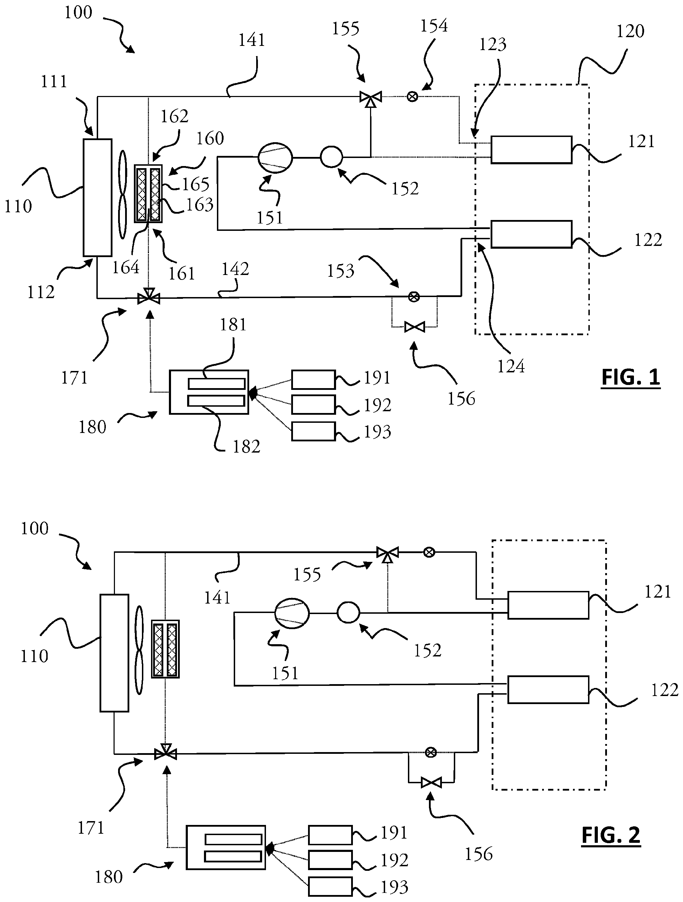

La figure 1 illustre un premier mode de réalisation d'une boucle de circulation 100 selon l'invention, comprenant dans cet exemple un échangeur thermique frontal 110 destiné à être présent à l'extérieur de l'habitacle d'un véhicule, et notamment en face avant du véhicule, sous le capot avant de celui-ci, et un dispositif d'échange thermique 120 qui peut être agencé à proximité de l'habitacle et comprenant au moins un évaporateur 121. L'échangeur thermique frontal 110 peut notamment être disposé en amont du compartiment moteur et il peut notamment être un évapo-condenseur.

Dans l'exemple illustré, le dispositif d'échange thermique 120 présente la forme d'un boîtier HVAC comprenant au moins, outre l'évaporateur 121, un condenseur interne 122. Le dispositif d'échange thermique est un générateur de flux d'air à température régulée, qui prélève de l'air, le réchauffe ou le refroidit, puis l'envoie dans l'habitacle du véhicule. Plus précisément, l'air prélevé est pulsé à travers l'évaporateur ou le condenseur interne, avant d'être envoyé dans l'habitacle. L'air prélevé est soit de l'air provenant en totalité de l'extérieur, soit de l'air recyclé utilisant au moins une partie d'air de l'habitacle.

Les moyens d'échange thermique sont de préférence de type air/fluide, étant entendu que la forme de l'échangeur pourrait être modifiée sans sortir du contexte de l'invention.

Un premier conduit 141 relie une sortie 111 de l'échangeur thermique frontal à une entrée 123 du dispositif d'échange thermique. Un deuxième conduit 142 relie une sortie 124 du dispositif d'échange thermique à une entrée 112 de l'échangeur thermique, de sorte à former une boucle dans laquelle un fluide réfrigérant circule. Les conduits peuvent désigner tout type de canalisation couramment utilisée dans les boucles de chauffage pour véhicule. A titre d'exemple, un conduit peut désigner une canalisation réalisée à partir de polymères, de métal ou d'alliages, apte à confiner le fluide réfrigérant.

Le fluide réfrigérant est amené à prendre plusieurs phases distinctes -liquide ou vapeur- et plusieurs états de pression distincts au fur et à mesure de sa circulation dans la boucle en fonction des moyens d'échange thermique qu'il doit alimenter. La boucle peut comprendre notamment :
- un compresseur 151, dans lequel le fluide réfrigérant, sous forme vapeur, entre à basse pression pour ressortir à haute pression,
- un accumulateur 152 configuré pour séparer les phases du liquide réfrigérant et ne laisser sortir celui-ci que sous la forme vapeur, et notamment disposé en amont du compresseur 151, ainsi que
- un premier 153 et un deuxième 154 détendeur d'où le liquide réfrigérant est amené à sortir à basse pression, sous forme de liquide et de vapeur.

La boucle de circulation comprend en outre un élément de distribution 155 configuré pour, selon qu'on vise un mode pompe à chaleur ou un mode climatisation, orienter le fluide réfrigérant vers le dispositif d'échange thermique 120 ou directement vers le compresseur 151. La boucle de circulation comprend également un bypass 156, disposé en parallèle du premier détendeur 153, afin de pouvoir choisir l'état dans lequel le fluide réfrigérant est amené vers l'échangeur thermique frontal 110, de sorte notamment à éviter la détente dans le détendeur 153..

La boucle de circulation comprend selon l'invention un module de stockage 160 d'énergie thermique, permettant d'échanger de l'énergie thermique avec le fluide réfrigérant. Pour cela, le module de stockage comprend une entrée 161 reliée au deuxième conduit 142 par l'intermédiaire d'une vanne 171, de type vanne trois voies. Une sortie 162 du module de stockage est raccordée au premier conduit 141 en amont du compresseur 151, et notamment en amont de l'élément de distribution 155. De préférence, la sortie 162 du module de stockage est reliée au plus près du compresseur 151 afin de limiter les phénomènes de pertes de chaleur lorsque le fluide s'écoule entre le module de stockage 160 et le compresseur 151. Le module de stockage 160 est de préférence configuré pour stocker entre 200 et 1 OOOWh à une température de l'ordre de 15°C.

Le module de stockage 160 d'énergie thermique est configuré pour mettre le fluide réfrigérant en contact thermique direct avec une quantité déterminée de matériau apte à changer de phase 163, ce « Matériau à Changement de Phase » ou « MCP », également connu sous la dénomination « Phase Change Material » en anglais, ou « PCM », ayant la particularité de pouvoir stocker l'énergie sous forme de calories à mesure qu'il change de phase.

Le module de stockage 160 d'énergie thermique est formé de telle sorte que le fluide réfrigérant peut s'introduire dans le carter via l'entrée 161 et s'échapper du carter via la sortie 162. Au moins une partie du fluide réfrigérant peut ainsi s'écouler dans le carter 165 et interagir thermiquement avec le matériau à changement de phase 163. Le matériau à changement de phase placé peut par exemple se présenter sous forme de tubes, microbilles ou granulés, le long desquels le liquide réfrigérant peut s'écouler en traversant le carter. Bien entendu, d'autres configurations permettant une interaction thermique entre le matériau à changement de phase et le fluide réfrigérant s'écoulant au travers du carter peuvent être envisagées.

Dans ce premier mode de réalisation illustré, le module de stockage 160 d'énergie électrique est formé le long d'une conduite 164, montée en dérivation de l'échangeur thermique 110 frontal pour la circulation du fluide réfrigérant, et il comporte un carter 165 définissant une chambre de réception du matériau de changement de phase 163 et entourant la conduite de circulation de fluide 164 de sorte qu'une paroi interne est commune avec cette conduite. De la sorte, l'échange thermique entre le fluide réfrigérant et le matériau à changement de phase est particulièrement efficace et rapide dans le temps. Toutefois, selon une autre réalisation possible, le carter 165 pourrait aussi être réalisé de sorte à avoir une paroi distincte de celle de la conduite, une partie de la paroi du carter étant alors conformée pour épouser la forme de la paroi externe de la conduite 164, le contact des parois du carter et de la conduite permettant l'échange thermique entre le fluide réfrigérant et le matériau à changement de phase, néanmoins, avec de moindres performances que la réalisation avec une paroi commune. Par ailleurs, la forme du carter peut être configurée selon toute autre forme que cylindrique, permettant de conduire un fluide réfrigérant et de contenir un matériau à changement de phase. Selon l'invention, le matériau à changement de phase 163 est choisi de manière à présenter, dans la plage de températures obtenues au sein de l'échangeur thermique, une transition solide-liquide. Lorsque le matériau à changement de phase atteint, après avoir été chauffé ou refroidi selon sa température initiale, sa température de changement de phase, il emmagasine ou restitue de l'énergie relativement à son environnement proche. Lorsque le véhicule est en recharge, et que le fluide réfrigérant est dirigé à travers la conduite de circulation 164 pour traverser le module de stockage 160, les passages successifs du fluide réfrigérant à travers le module de stockage, réchauffé à chaque boucle car circulant en boucle fermée, participent à l'augmentation de la température jusqu'à atteindre la température de changement de phase, à laquelle, pour passer d'un état solide à liquide dans l'exemple décrit, le matériau à changement de phase absorbe une quantité de chaleur déterminée, fonction de sa masse et de la caractéristique, propre à chaque matériau, de chaleur latente.

A l'inverse, et notamment dans une phase de démarrage, où l'on souhaite élever la température du fluide réfrigérant pour optimiser la production d'air chaud soufflé dans l'habitacle, la température du matériau à changement de phase baisse jusqu'à atteindre la température de changement de phase, et donc pour passer d'un état liquide à un état solide, le matériau à changement de phase se transformant alors en restituant l'énergie préalablement stockée.

Selon un exemple choisi, le matériau à changement de phase peut être choisi parmi l'un de ces matériaux, ou tout au moins comporter l'un de ces matériaux :
- composés inorganiques tels qu'un alliage de sels organiques et d'eau ;
- composés organiques tels que les paraffines et les acides gras ;
- composés eutectiques ;
- composés d'origine végétale.

On pourra intégrer le matériau à changement de phase dans le module de stockage aussi bien sous forme liquide, que sous forme solide, et notamment dans ce dernier cas sous forme d'un matériau composite polymérisé, par exemple sous forme de feuille.

La plage de température de changement de phase du matériau à changement de phase peut notamment être de l'ordre de 10°C à 40°C, et il est intéressant dans le mode d'application ici décrit de prévoir une température critique de changement de phase du MCP égale à 15°C.

On comprend que cette température critique de changement de phase peut varier d'une application à l'autre sans sortir du contexte de l'invention, et que la valeur de 15°C n'est ici donnée qu'à titre d'exemple. Il convient de noter que le matériau à changement de phase peut être en outre caractérisé par la vitesse d'absorption et de restitution de l'énergie, notamment pour choisir un matériau susceptible d'offrir une grande réactivité aux variations de température du fluide réfrigérant, qui peut être amené à varier fréquemment en fonction des besoins de gestion thermique du véhicule.

On va maintenant décrire l'application utile d'un module de stockage thermique selon l'invention, c'est-à-dire disposé dans la boucle de circulation ici en parallèle de l'échangeur thermique frontal.

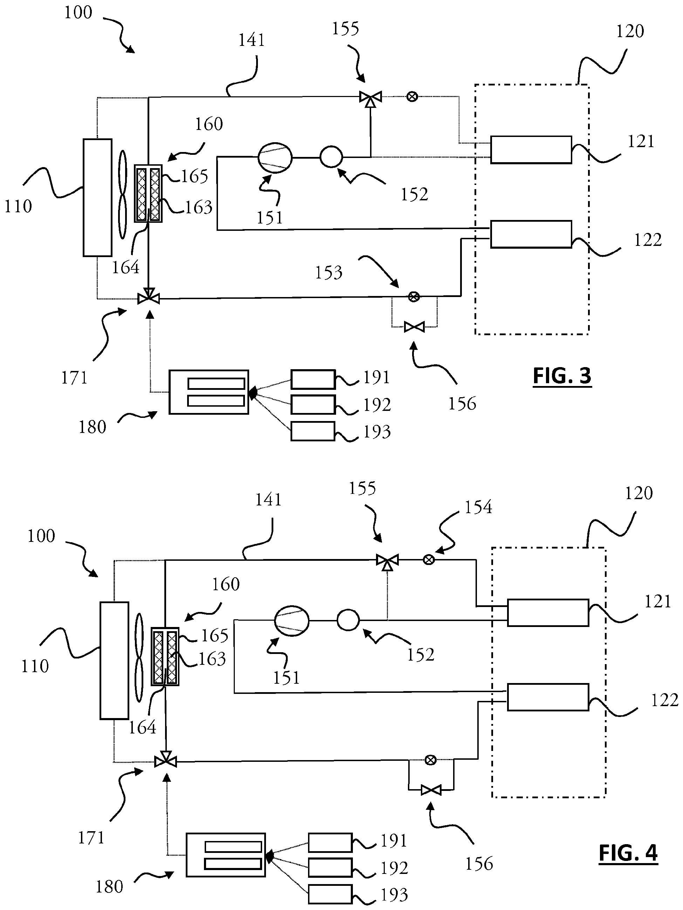

L'installation de chauffage, de ventilation et/ou de climatisation comportant cette boucle peut notamment fonctionner en un mode pompe à chaleur, avec passage du fluide réfrigérant dans l'échangeur thermique frontal (figure 1) ou bien passage du fluide réfrigérant dans le module de stockage thermique (figure 2), en un mode climatisation (figure 2), ou encore en un mode de rechargement du module de stockage thermique (figure 4). Sur chacune des figures, on a illustré en traits plein les conduits de la boucle dans lesquels le fluide réfrigérant circule en fonction du mode choisi.

En mode pompe à chaleur, il est recherché un réchauffement de l'air soufflé dans l'habitacle. A cet effet, le module de distribution 155 est piloté, notamment en fonction d'une commande de l'utilisateur, pour être dans une position bloquant le passage de fluide vers l'évaporateur du dispositif d'échange de chaleur 120 et le dirigeant directement vers l'accumulateur 152 et le compresseur 151. Le fluide réfrigérant est porté à haute pression pour être dirigée à travers le condenseur interne 122 du dispositif d'échange de chaleur. Il en résulte un transfert de chaleur avec l'air pulsé à travers le condenseur, le volet de mixage étant déplacé dans une position adéquate. L'air pulsé réchauffé pénètre dans l'habitacle et le fluide réfrigérant refroidi continue sa circulation à travers la boucle en traversant le premier détendeur 153. Le fluide réfrigérant désormais à basse pression s'écoule le long du deuxième conduit 142 jusqu'à rencontrer la vanne 171. La vanne est pilotée pour orienter le fluide vers l'échangeur thermique frontal 110 (figure 1) ou vers le module de stockage 160 (figure 2). Dans l'exemple illustré, la vanne est une vanne 3 voies, et on comprend que sans sortir du contexte de l'invention, on pourrait réaliser le même pilotage avec deux vannes 2 voies par exemple. Les conditions de pilotage de la vanne peuvent être fonction de la température de l'air extérieur, et/ou de la température du fluide réfrigérant dans le deuxième conduit 142, et/ou de la température du matériau à changement de phase 163 et/ou une durée de temps défini après le démarrage du véhicule. Ces conditions de pilotage seront notamment détaillées ci-après.

De manière générale, on peut prévoir que la vanne 171 soit pilotée systématiquement au démarrage sur la position illustrée sur la figure 3, dans laquelle le fluide réfrigérant est orienté vers le module de stockage thermique, étant entendu qu'au démarrage du véhicule, le module de stockage thermique doit normalement être chargé, c'est-à-dire comprendre un matériau à changement de phase prêt à être refroidi pour transmettre son énergie au fluide réfrigérant. On comprendra que l'on peut s'assurer, par un capteur approprié placé en aval du module de stockage thermique, que le fluide passant par le module de stockage thermique est modifié et que le module de stockage thermique est ainsi correctement chargé. Dans le cas contraire, la vanne 171 serait pilotée pour reprendre un mode de fonctionnement usuel, passant par l'échangeur thermique frontal.

Lorsque, tel qu'illustré sur la figure 3, le fluide passe par la conduite 164 à travers la chambre interne remplie de matériau à changement de phase 163, le fluide se réchauffe et est ensuite dirigé via le module de distribution 155 de nouveau vers l'accumulateur et le compresseur. Les boucles se poursuivent en l'état, avec la vanne 171 orientant le fluide vers le module de stockage 160, jusqu'à ce que le matériau à changement de phase, à force de transfert d'énergie vers le fluide, soit porté à une température inférieure ou égale à la température du fluide, le module de stockage étant alors déchargé. Dans ce mode de fonctionnement, c'est l'énergie du matériau à changement de phase qui est utilisée pour réchauffer le fluide plutôt que l'air extérieur. On comprend que l'on peut estimer le temps de déchargement du module de stockage dans un mode de fonctionnement normal, par exemple en fonction de la température extérieure, et que la vanne 171 pourra être automatiquement pilotée en position orientant le fluide vers l'échangeur thermique frontal dès que ce temps de déchargement estimé est atteint. La vanne 171 permet n outre d'isoler le module de stockage 160 de la boucle de circulation pour des phases de fonctionnement déterminées, typiquement lorsque le module de stockage est complètement déchargé (c'est-à-dire lorsque la température du matériau à changement de phase devient inférieure à la température extérieure, voire inférieure à la température extérieure moins un écart de température donné, cet écart pouvant être fixé à -5°C par exemple) ou lorsque le module de stockage est complètement chargé (c'est-à-dire lorsque la température du matériau à changement de phase devient supérieure à la température de fusion du matériau à changement de phase, voire supérieure à la température de fusion plus un écart de température donné, en particulier d'un écart de +5°C par exemple).

Ce fonctionnement permet, par le déstockage progressif de l'énergie du matériau à changement de phase, de réduire la consommation de la pompe à chaleur et/ou d'augmenter la puissance de chauffage. Le compresseur consomme moins d'énergie par exemple car le fluide réfrigérant est plus chaud grâce au moyen de stockage thermique. On retarde le démarrage de l'échangeur thermique frontal, et lorsque celui-ci est activé, la puissance absorbée en face avant pour augmenter l'énergie du fluide réfrigérant est diminuée, de sorte que l'on limite/retarde le risque de givrage par une diminution de la condensation sur les parois de l'échangeur thermique frontal.

Une fois le module de stockage déchargé, ou estimé comme déchargé, la position de la vanne 171 est modifiée, et le fluide est orienté vers l'échangeur thermique frontal, de sorte que l'on retrouve un mode de fonctionnement classique, tel qu'illustré sur la figure 1. Le fluide échange alors thermiquement avec l'air ambiant passant à travers l'échangeur thermique frontal, avant d'être dirigé vers le compresseur.

La boucle de circulation peut être configurée pour permettre le passage en mode climatisation, notamment suite à une demande de l'utilisateur. Dans ce cas, l'élément de distribution 155 dirige le fluide à travers un deuxième détendeur 154 pour baisser la pression et la température du fluide avant son passage à travers l'évaporateur 121 du dispositif d'échange thermique 120, dans lequel il participe à refroidir l'air pulsé par la suite dans l'habitacle. Le fluide réfrigérant est ensuite dirigé à travers l'accumulateur 152, le compresseur 151, le condenseur interne 122 dans lequel il ne fait que passer sans échange thermique car le volet de mixage d'air du dispositif d'échange thermique 120 a bloqué l'admission d'air dans ce condenseur. Le fluide passe ensuite à travers le bypass 156 pour éviter sa détente et rester à haute pression avant d'être orienté à travers l'échangeur thermique frontal 110, où il est refroidi par l'air extérieur. Il en résulte que ce fluide réfrigérant refroidi, puis de nouveau détendu par le deuxième détendeur 154 en amont de l'évaporateur 121 facilite le refroidissement de l'air passant à travers l'évaporateur dans le passage suivant dans la boucle.

Sur la figure 4, on a illustré un mode de recharge du module de stockage thermique, mis notamment en œuvre lorsque le véhicule électrique ou hybride est branché sur le secteur pour l'alimentation des batteries. La vanne 171 est pilotée pour orienter le fluide réfrigérant à travers le module de stockage thermique. Ce mode de recharge se réalise avec une boucle configurée en mode climatisation, c'est-à-dire avec un fluide réfrigérant orienté par l'élément de distribution 155 vers l'évaporateur 121 du dispositif d'échange de chaleur 120. Il peut être prévu de laisser circuler l'air dans l'évaporateur, ou de bloquer l'air dans un mode « hot gas ». Le fluide circulant dans la boucle est mis à haute pression par le compresseur 151, puis il est dérivé par le bypass 156 pour éviter la détente du premier détendeur 153, de sorte qu'il pénètre dans le module de stockage thermique 160 à haute température, en réchauffant de la sorte le matériau à changement de phase. Ce mode de circulation se prolonge jusqu'à ce que le module de stockage thermique ait emmagasiné une quantité d'énergie déterminée (par exemple, lorsque le matériau de changement de phase parvient à une température égale à +5°C par rapport à la température extérieure), voire même la quantité d'énergie maximale que peut emmagasiner le module de stockage.

On peut noter que le module de stockage thermique, tel qu'il est disposé en parallèle de l'échangeur thermique frontal, est utile aussi bien dans le mode pompe à chaleur illustré sur la figure 3, pour participer au chauffage de l'air de l'habitacle notamment au démarrage du véhicule, que dans le mode climatisation illustré sur la figure 4, pour être rechargé. Quelle que soit la position de l'élément de distribution 155, le module de stockage thermique 160 est accessible.

Par ailleurs, dans l'exemple illustré, l'actionnement de la vanne 171 peut être contrôlée par une unité de commande 180 comprenant un calculateur 181 permettant de mesurer une durée de temps déterminée et des moyens de mémorisation 182 aptes à mémoriser un programme de pilotage de la boucle de circulation décrit ci-dessous, au moins une valeur seuil de température et/ou au moins une valeur de référence de temps mentionnées ci-dessus.

L'unité de commande 180 peut être connectée à une première sonde thermique 191, destinée à mesurer la température de l'air à l'extérieur de l'habitacle du véhicule et elle peut être connectée à une deuxième sonde thermique 192 destinée à mesurer la température du fluide réfrigérant circulant dans la boucle, notamment en sortie de l'élément de distribution d'air 155, étant entendu que cette deuxième sonde thermique 192, ou une sonde thermique supplémentaire, pourrait être utilisée pour mesurer la température de l'air à l'intérieur de l'habitacle. L'unité de commande 180 peut en outre être connecté à une troisième sonde thermique 193 destinée à mesurer la température du matériau à changement de phase dans le module de stockage.

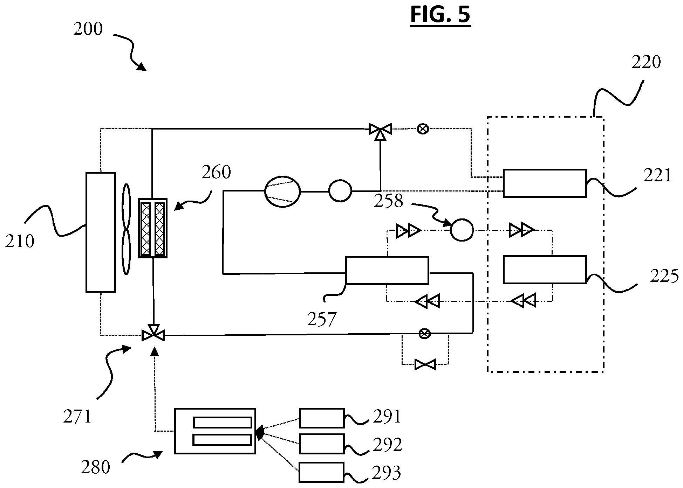

On va maintenant décrire, en se référant à la figure 5, un deuxième exemple de réalisation d'une boucle de circulation 200 selon l'invention. Selon ce nouveau mode de réalisation, les éléments présentant les mêmes fonctions que dans le premier mode de réalisation sont référencés avec des numéros ayant la même dizaine et la même unité.

Ce second exemple diffère du précédent en ce que le dispositif d'échange de chaleur 220 comprend un évaporateur 221 et un radiateur 225, en lieu et place du condenseur interne décrit précédemment. L'installation de chauffage, de ventilation et/ou de climatisation comprend en outre un échangeur réfrigérant-eau additionnel 257, de type condenseur air-eau, qui forme avec le radiateur 225 une boucle additionnelle dans laquelle de l'eau glycolé circule sous l'effet d'une pompe 258. Dans ce cas, le fluide réfrigérant est amené à circuler dans le condenseur pour échanger sa chaleur avec l'eau glycolée qui transmet par la suite la chaleur à l'air pulsé à travers le radiateur 225 du dispositif d'échange de chaleur 220. Le module de stockage thermique 260 est comme précédemment disposé en parallèle de l'échangeur thermique frontal 210 afin de dériver tout ou partie du fluide réfrigérant, et il comporte ici la même forme de carter avec une chambre de réception d'un matériau à changement de phase.

On a illustré sur la figure 5 le mode de stockage d'énergie, dans lequel le fluide réfrigérant est amené à circuler à l'intérieur du module de stockage 260 pour y échanger de la chaleur sans passer par l'évapo-condenseur 210 en parallèle duquel le module de stockage 260 s'étend. On comprend que les autres modes fonctionnent de façon similaire à ce qui a été décrit précédemment.

Dans chacun des modes de réalisation de la boucle de circulation, on peut prévoir au moins une étape de mesure de température de l'air ambiant et/ou du fluide réfrigérant circulant dans la boucle, suivi d'une étape de comparaison de cette valeur mesurée avec une valeur seuil de température, et suivi d'une étape de commande visant à diriger le fluide réfrigérant en tout ou partie à travers le module de stockage thermique en fonction du résultat de l'étape de comparaison.

Ce procédé peut notamment être mis en œuvre à l'allumage du véhicule, ou dès la mise en route du compresseur associé à la boucle de circulation.

La mesure de température peut être faite par l'intermédiaire de la première sonde thermique 191, 291 pour déterminer une valeur de la température de l'air ambiant, présent à l'extérieur de l'habitacle du véhicule, ou par une deuxième sonde thermique 192, 292 pour déterminer la température du fluide réfrigérant, ou par une troisième sonde thermique 193, 293 pour déterminer la température du matériau à changement de phase.

Selon que la valeur soit inférieure ou supérieure à un seuil de température mémorisée dans l'unité de commande 180, 280, on pourra piloter la vanne 171, 271 de sorte à ce qu'au moins une partie, de préférence la totalité, du débit du fluide réfrigérant provenant du dispositif d'échange thermique 120 ou 220 passe par le module de stockage 160 ou 260.

On comprend à la lecture de ce qui précède que l'invention permet, notamment lorsque le véhicule électrique ou hybride est en chargement électrique, de stocker de l'énergie thermique dans un module de stockage relié à une boucle de pompe à chaleur dans une installation de chauffage, de ventilation et/ou de climatisation circulation d'un fluide réfrigérant pour un véhicule, afin de pouvoir réutiliser cette énergie stockée, notamment au démarrage du véhicule et lorsque la température est très basse, et par exemple inférieure à -10°C, afin d'une part d'éviter de faire travailler l'échangeur thermique frontal risquant de givrer dans de telles conditions, et d'autre part de diminuer la puissance à développer par le compresseur et de prolonger l'autonomie électrique du véhicule.

## Revendications

1. Boucle de circulation (100, 200) d'un fluide réfrigérant pour véhicule automobile comportant un dispositif d'échange de chaleur (120, 220) comprenant au moins un évaporateur (121, 221) et un élément de distribution (155, 255) piloté pour configurer la boucle selon au moins un premier mode dans lequel le fluide réfrigérant ne passe pas par l'évaporateur et un deuxième mode dans lequel le fluide réfrigérant passe par l'évaporateur, ladite boucle comprenant en outre un module de stockage (160, 260) d'énergie thermique comportant un matériau apte à changer de phase (163), le module de stockage étant disposé sur le passage du fluide que la boucle soit configurée selon le premier ou le deuxième mode, la boucle de circulation comprenant en outre un échangeur thermique frontal (110, 210), ladite boucle étant **caractérisée en ce que** le module de stockage (160, 260) d'énergie thermique est agencé dans la boucle de circulation, en parallèle de l'échangeur thermique frontal (110, 210).

2. Boucle de circulation d'un fluide réfrigérant selon la revendication précédente, dans laquelle le module de stockage (160, 260) d'énergie thermique est agencé dans la boucle de circulation, en parallèle de l'échangeur thermique frontal (110, 210) par l'intermédiaire d'au moins une vanne (171, 271) permettant de contrôler le débit de fluide réfrigérant passant par le module de stockage (160, 260).

3. Boucle de circulation d'un fluide réfrigérant selon la revendication précédente, comportant en outre une unité de commande (180, 280) permettant de modifier la position de l'au moins une vanne (171, 271) de sorte qu'au moins une partie, de préférence la totalité du fluide réfrigérant, échange de l'énergie thermique avec le module de stockage (160, 260).

4. Boucle de circulation d'un fluide réfrigérant selon l'une des revendications 2 ou 3 dans laquelle l'unité de commande (180, 280) modifie la position de l'au moins une vanne (171, 271) de sorte que l'échangeur thermique frontal (110, 210) soit fluidiquement isolé du module de stockage (160, 260).

5. Boucle de circulation d'un fluide réfrigérant selon l'une des revendications 3 ou 4 , dans laquelle l'unité de commande (180, 280) est connectée à une première sonde thermique (191, 291) destinée à mesurer la température de l'air à l'extérieur de l'habitacle du véhicule.

6. Boucle de circulation d'un fluide réfrigérant selon l'une des revendications 4 à 5, dans laquelle l'unité de commande (180, 280) est connectée à une deuxième sonde thermique (192, 292) destinée à mesurer la température de l'air à l'intérieur de l'habitacle du véhicule et/ou la température du fluide réfrigérant en une zone déterminée de la boucle de circulation.

7. Boucle de circulation d'un fluide réfrigérant selon l'une des revendications 4 à 6, dans laquelle l'unité de commande (180, 280) est connectée à une troisième sonde thermique (193, 293) destinée à mesurer la température du matériau à changement de phase dans le module de stockage (160, 260).

8. Boucle de circulation d'un fluide réfrigérant selon l'une des revendications précédentes, dans laquelle le module de stockage (160, 260) d'énergie thermique comporte un carter (165) réalisé dans un matériau conducteur thermique, le carter étant configuré pour :
- contenir le matériau apte à changer de phase (163),
- comprendre une entrée (161) et une sortie (162) via lesquelles respectivement, le fluide réfrigérant s'introduit dans le carter et s'échappe du carter, de telle sorte qu'au moins une partie du fluide réfrigérant s'écoulant dans le carter interagisse thermiquement avec le matériau à changement de phase.

9. Boucle de circulation d'un fluide réfrigérant selon la revendication précédente, dans laquelle une conduite (164) relie l'entrée (161) et la sortie (162) du carter, la conduite et le carter (165) partageant au moins une paroi commune de sorte que la chaleur du fluide réfrigérant, respectivement du matériau apte à changer de phase (163), est transférée via cette paroi au matériau apte à changer de phase, respectivement au fluide réfrigérant.

10. Boucle de circulation d'un fluide réfrigérant selon l'une des revendications précédentes, dans laquelle le matériau apte à changer de phase (163) présente une température de fusion comprise entre 10° et 40°C.

11. Boucle de circulation d'un fluide réfrigérant selon l'une des revendications précédentes, dans laquelle le dispositif d'échange de chaleur (120) comporte en outre un condenseur interne (122).

12. Boucle de circulation d'un fluide réfrigérant selon l'une des revendications 2 à 11, dans laquelle le dispositif d'échange de chaleur (220) comporte en outre un radiateur (225), et le radiateur (225) étant couplé par un circuit additionnel à un échangeur réfrigérant-eau additionnel (257).

13. Véhicule comprenant une boucle de circulation d'un fluide réfrigérant selon l'une des revendications précédentes.

14. Procédé de pilotage de la circulation d'un fluide réfrigérant dans une boucle selon l'une des revendications 1 à 12, comprenant au moins :
- une étape de mesure de température de l'air ambiant et/ou du fluide réfrigérant circulant dans la boucle et/ou du matériau à changement de phase,
- une étape de comparaison de cette valeur mesurée avec une valeur seuil de température, et
- une étape de commande visant à diriger le fluide réfrigérant en tout ou partie à travers le module de stockage thermique en fonction du résultat de l'étape de comparaison.

## Patentansprüche

1. Zirkulationsschleife (100, 200) eines Kühlmittels für ein Kraftfahrzeug, die eine mindestens einen Verdampfer (121, 221) enthaltende Wärmetauschervorrichtung (120, 220) und ein Verteilerelement (155, 255) aufweist, das gesteuert wird, um die Schleife gemäß mindestens einer ersten Betriebsart, in der das Kühlmittel den Verdampfer nicht durchfließt, und einer zweiten Betriebsart zu konfigurieren, in der das Kühlmittel den Verdampfer durchfließt, wobei die Schleife außerdem ein Speichermodul (160, 260) von Wärmeenergie enthält, das ein Phasenwechselmaterial (163) aufweist, wobei das Speichermodul auf dem Durchgang des Mittels angeordnet ist, unabhängig davon, ob die Schleife gemäß der ersten oder der zweiten Betriebsart konfiguriert ist, wobei die Zirkulationsschleife außerdem einen frontalen Wärmetauscher (110, 210) enthält, wobei die Schleife **dadurch gekennzeichnet ist, dass** das Wärmeenergie-Speichermodul (160, 260) in der Zirkulationsschleife parallel zum frontalen Wärmetauscher (110, 210) eingerichtet ist.

2. Zirkulationsschleife eines Kühlmittels nach dem vorhergehenden Anspruch, wobei das Wärmeenergie-Speichermodul (160, 260) in der Zirkulationsschleife parallel zum frontalen Wärmetauscher (110, 210) mittels mindestens eines Ventils (171, 271) eingerichtet ist, das es ermöglicht, den das Speichermodul (160, 260) durchfließenden Kühlmitteldurchsatz zu kontrollieren.

3. Zirkulationsschleife eines Kühlmittels nach dem vorhergehenden Anspruch, die außerdem eine Steuereinheit (180, 280) aufweist, die es ermöglicht, die Stellung des mindestens einen Ventils (171, 271) zu ändern, so dass mindestens ein Teil, vorzugsweise die Gesamtheit, des Kühlmittels Wärmeenergie mit dem Speichermodul (160, 260) austauscht.

4. Zirkulationsschleife eines Kühlmittels nach einem der Ansprüche 2 oder 3, wobei die Steuereinheit (180, 280) die Stellung des mindestens einen Ventils (171, 271) ändert, damit der frontale Wärmetauscher (110, 210) vom Speichermodul (160, 260) fluidisch isoliert wird.

5. Zirkulationsschleife eines Kühlmittels nach einem der Ansprüche 3 oder 4, wobei die Steuereinheit (180, 280) mit einem ersten Temperaturfühler (191, 291) verbunden ist, der dazu bestimmt ist, die Temperatur der Luft außerhalb des Innenraums des Fahrzeugs zu messen.

6. Zirkulationsschleife eines Kühlmittels nach einem der Ansprüche 4 bis 5, wobei die Steuereinheit (180, 280) mit einem zweiten Temperaturfühler (192, 292) verbunden ist, der dazu bestimmt ist, die Temperatur der Luft im Inneren des Innenraums des Fahrzeugs und/oder die Temperatur des Kühlmittels in einem bestimmten Bereich der Zirkulationsschleife zu messen.

7. Zirkulationsschleife eines Kühlmittels nach einem der Ansprüche 4 bis 6, wobei die Steuereinheit (180, 280) mit einem dritten Temperaturfühler (193, 293) verbunden ist, der dazu bestimmt ist, die Temperatur des Phasenwechselmaterials im Speichermodul (160, 260) zu messen.

8. Zirkulationsschleife eines Kühlmittels nach einem der vorhergehenden Ansprüche, wobei das Wärmeenergie-Speichermodul (160, 260) ein Gehäuse (165) aufweist, das aus einem wärmeleitenden Material hergestellt ist, wobei das Gehäuse konfiguriert ist, um:
- das Phasenwechselmaterial (163) zu enthalten,
- einen Eingang (161) und einen Ausgang (162) zu enthalten, über die das Kühlmittel in das Gehäuse eingeführt wird bzw. aus dem Gehäuse austritt, so dass mindestens ein Teil des im Gehäuse fließenden Kühlmittels thermisch mit dem Phasenwechselmaterial interagiert.

9. Zirkulationsschleife eines Kühlmittels nach dem vorhergehenden Anspruch, wobei eine Leitung (164) den Eingang (161) und den Ausgang (162) des Gehäuses verbindet, wobei die Leitung und das Gehäuse (165) sich mindestens eine gemeinsame Wand teilen, so dass die Wärme des Kühlmittels bzw. des Phasenwechselmaterials (163) über diese Wand auf das Phasenwechselmaterial bzw. auf das Kühlmittel übertragen wird.

10. Zirkulationsschleife eines Kühlmittels nach einem der vorhergehenden Ansprüche, wobei das Phasenwechselmaterial (163) eine Schmelztemperatur zwischen 10° und 40°C aufweist.

11. Zirkulationsschleife eines Kühlmittels nach einem der vorhergehenden Ansprüche, wobei die Wärmetauschervorrichtung (120) außerdem einen inneren Verflüssiger (122) aufweist.

12. Zirkulationsschleife eines Kühlmittels nach einem der Ansprüche 2 bis 11, wobei die Wärmetauschervorrichtung (220) außerdem einen Kühler (225) aufweist, und der Kühler (225) durch einen zusätzlichen Kreislauf mit einem zusätzlichen Kühlmittel-Wasser-Tauscher (257) gekoppelt ist.

13. Fahrzeug, das eine Zirkulationsschleife eines Kühlmittels nach einem der vorhergehenden Ansprüche enthält.

14. Steuerverfahren der Zirkulation eines Kühlmittels in einer Schleife nach einem der Ansprüche 1 bis 12, das mindestens enthält:
- einen Schritt der Temperaturmessung der Umgebungsluft und/oder des in der Schleife zirkulierenden Kühlmittels und/oder des Phasenwechselmaterials,
- einen Schritt des Vergleichs dieses gemessenen Werts mit einem Temperaturschwellwert, und
- einen Steuerschritt, der darauf abzielt, das Kühlmittel abhängig vom Ergebnis des Vergleichsschritts ganz oder teilweise durch das Wärmespeichermodul zu lenken.

## Claims

1. Coolant circulation loop (100, 200) for a motor vehicle comprising a heat-exchange device (120, 220) comprising at least an evaporator (121, 221) and a distribution element (155, 255) controlled to configure the loop according to at least a first mode in which the coolant does not pass through the evaporator and a second mode in which the coolant passes through the evaporator, said loop further comprising a thermal energy storage module (160, 260) comprising a material capable of changing phase (163), the storage module being arranged on the passage of the fluid whether the loop is configured according to the first or the second mode, the circulation loop further comprising a front-end air heater (110, 210), said loop being **characterized in that** the thermal energy storage module (160, 260) is arranged in the circulation loop, in parallel with the front-end air heater (110, 210).

2. Coolant circulation loop according to the preceding claim, in which the thermal energy storage module (160, 260) is arranged in the circulation loop, in parallel with the front-end air heater (110, 210) via at least one valve (171, 271) making it possible to control the flow rate of coolant passing through the storage module (160, 260) .

3. Coolant circulation loop according to the preceding claim, further comprising a control unit (180, 280) making it possible to modify the position of the at least one valve (171, 271) such that at least a part, preferably all, of the coolant exchanges thermal energy with the storage module (160, 260).

4. Coolant circulation loop according to one of Claims 2 or 3, in which the control unit (180, 280) modifies the position of the at least one valve (171, 271) such that the front-end air heater (110, 210) is fluidically isolated from the storage module (160, 260).

5. Coolant circulation loop according to one of Claims 3 or 4, in which the control unit (180, 280) is connected to a first thermal probe (191, 291) intended to measure the temperature of the air outside the interior of the vehicle.

6. Coolant circulation loop according to one of Claims 4 to 5, in which the control unit (180, 280) is connected to a second thermal probe (192, 292) intended to measure the temperature of the air inside the interior of the vehicle and/or the temperature of the coolant in a determined zone of the circulation loop.

7. Coolant circulation loop according to one of Claims 4 to 6, in which the control unit (180, 280) is connected to a third thermal probe (193, 293) intended to measure the temperature of the phase change material in the storage module (160, 260).

8. Coolant circulation loop according to one of the preceding claims, in which the thermal energy storage module (160, 260) comprises a casing (165) produced in a heat-conducting material, the casing being configured to:
- contain the material capable of changing phase (163),
- comprise an inlet (161) and an outlet (162) via which, respectively, the coolant is introduced into the casing and escapes from the casing, such that at least a part of the coolant flowing in the casing interacts thermally with the phase change material.

9. Coolant circulation loop according to the preceding claim, in which a duct (164) links the inlet (161) and the outlet (162) of the casing, the duct and the casing (165) sharing at least one common wall such the heat of the coolant, respectively of the material capable of changing phase (163), is transferred via this wall to the material capable of changing phase, respectively to the coolant.

10. Coolant circulation loop according to one of the preceding claims, in which the material capable of changing phase (163) has a melting point lying between 10° and 40°C.

11. Coolant circulation loop according to one of the preceding claims, in which the heat-exchange device (120) further comprises an internal condenser (122).

12. Coolant circulation loop according to one of Claims 2 to 11, in which the heat-exchange device (220) further comprises a radiator (225), and the radiator (225) being coupled by an additional circuit to an additional coolant-water exchanger (257).

13. Vehicle comprising a coolant circulation loop according to one of the preceding claims.

14. Method for controlling the circulation of a coolant in a loop according to one of Claims 1 to 12, comprising at least:
- a step of measuring the temperature of the ambient air and/or of the coolant circulating in the loop and/or of the phase change material,
- a step of comparison of this measured value with a temperature threshold value, and
- a control step aiming to direct the coolant wholly or partly through the thermal storage module as a function of the result of the comparison step.
